# EUROPÄISCHE PATENTSCHRIFT

(11) **EP 1 366 612 B1**
(45) Veröffentlichungstag und Bekanntmachung des Hinweises auf die Patenterteilung: **30.07.2008**
(21) Anmeldenummer: 02703509.6
(22) Anmeldetag: 31.01.2002
(51) Int. Cl.: H04L 29/08, H04L 29/06, H04L 29/12, H04L 12/46, H04L 12/28

(54) **VERFAHREN UND VORRICHTUNG FÜR EIN L2TP-RECONNECTION-HANDLING**
METHOD AND DEVICE FOR L2TP RECONNECTION HANDLING
PROCEDE ET DISPOSITIF POUR UN RETABLISSEMENT DE COMMUNICATION L2TP

(30) Priorität: 09.03.2001 DE 10111493
(43) Veröffentlichungstag der Anmeldung: 03.12.2003
(73) Patentinhaber: Nokia Siemens Networks GmbH & Co. KG, 81541 München (DE)
(72) Erfinder: SCHÜLER, Hartmut, 82064 Strasslach (DE); REUSS, Gernot, 81379 München (DE); CHAN, Kwang Mien, 560344 Singapore (SG); KUMAR, Senthil, 670166 Singapore (SG); LIAW, Yong Shyang, 760784 Singapore (MY); LIEW, Joshua Seng Arn, 469124 Singapore (SG); SEAH, Winston Khoon Guan, 119224 Singapore (SG); TAN, Kean Soon, 455284 Singapore (SG)
(86) Internationale Anmeldenummer: PCT/DE2002/000342
(87) Internationale Veröffentlichungsnummer: WO 2002/073932

(56) Entgegenhaltungen:
- EP-A- 0 986 222
- WO-A-00/13110
- WO-A-00/41375
- CHUAH M C ET AL: "MOBILE VIRTUAL PRIVATE DIAL-UP SERVICES" BELL LABS TECHNICAL JOURNAL, BELL LABORATORIES, US, Bd. 4, Nr. 3, Juli 1999 (1999-07), Seiten 51-72, XP000878197 ISSN: 1089-7089
- CHUA M. ET AL: "Mobile PPP" Juni 1999 (1999-06) , IETF INTERNET DRAFT , IETF PPP WORKING GROUP XP002198913 Zusammenfassung Kapitel 1-2 Abbildungen 1-3 wurde in "Mobile Virtual Private Dial-up Services",Bell Labs, zitiert
- LATVALA M.: "Semi Connected Mode for PPP Links" November 1998 (1998-11) , IETF INTERNET DRAFT , POINT-TO-POINT PROTOCOL EXTENSION GROUP XP002198914 Kapitel 5
- BORDER J. ET AL: "Performance Enhancing Proxies" 25. Juni 1999 (1999-06-25) , IETF INTERNET DRAFT , INTERNET ENGINEERING TASK FORCE XP002198915 Kapitel 1 - Kapitel 2.5

## Beschreibung

Die Erfindung betrifft ein Verfahren und eine Vorrichtung zum Aufbau einer Verbindung zwischen einem mobilen Endgerät und einem Netzwerkserver über ein Mobilfunknetz und ein weiteres, z.B. Internetprotokoll- basiertes Netz.

Die Veröffentlichung von Chuah M. C. et al "Mobile virtual private dial- up services"; Bell Labs Technical Journal; Bell Laboratories; US; Bd. 4, Nr.3, Juli 1999 (1999-07), Seiten 51-72 (= www.lucent.com/minds/techjournal/pdf/jul-sep1999/paper04.pdf) beschreibt ein Verfahren zum Aufbau einer Verbindung eines mobilen Endgerätes mit einem Netzwerkserver über ein Mobilfunknetz und ein weiteres Netz, wobei bei einer Verbindungsunterbrechung einer Verbindung vom mobilen Endgerät zum Netzwerkserver ein Verbindungsteil zwischen dem Verbindungsserver und dem Netzwerkserver aufrechterhalten wird, welcher Verbindungsteil der Teil der Verbindung zwischen dem mobilen Endgerät und dem Netzwerkserver ist, wobei bei einem späteren Aufbau einer neuen Verbindung zwischen dem mobilen Endgerät und dem Netzwerkserver die aufrechterhaltene Teilverbindung der unterbrochenen Verbindung Teil der neuen Verbindung wird.

Aufgabe der vorliegenden Erfindung ist es, möglichst einfach und effizient einen Aufbau einer neuen Verbindung bei einem Abbruch einer (bisherigen) Verbindung zwischen einem mobilen Endgerät und einem Netzwerkserver seitens eines Netzes zu ermöglichen. Die Aufgabe wird jeweils auf die Gegenstände der unabhängigen Ansprüche gelöst.

Erfindungsgemäß kann eine Verbindung zwischen einem mobilen Endgerät und einem Netzwerkserver (beispielsweise eines Firmen- Intranets oder anderen privaten Netzes), welche über ein Mobilfunknetz und ein Internetprotokoll basiertes Netz läuft nach einem Abbruch (z.B. einer Funkstrecke) sehr schnell wieder aufgebaut werden. Durch die erfindungsgemäß ermöglichte Wiederzuweisung einer in der bisherigen (abgebrochenen) Verbindung zwischen dem mobilen Endgerät (mobile host) und dem Netzwerkserver verwendeten Internetprotokolladresse (des mobilen Endgerätes) für die Session nach dem Aufbau einer neuen Verbindung zwischen dem mobilen Endgerät und dem Netzwerkserver werden Verluste, welche ohne diese Möglichkeit auftreten würden, vermieden; insbesondere wird vermieden, dass bei der Unterbrechung einer Verbindung zwischen dem mobilen Endgerät und dem Netzwerkserver während der Übertragung einer großen Datenmenge, beispielsweise eines großen Files, dem mobilen Endgerät eine neue Internetadresse zugewiesen und die Datei komplett erneut übertragen wird, indem vorteilhafterweise die alte Internetadresse der abgebrochenen Verbindung erneut dem mobilen Endgerät (vom Verbindungsserver) zugewiesen werden kann und vom Verbindungsserver eine Verbindung mit der alten Adresse zwischen dem mobilen Endgerät und dem Netzwerkserver weitergeführt werden kann.

Das mobile Endgerät kann ein beliebiges mobiles Endgerät sein, welches zur Datenübertragung über ein Mobilfunknetz geeignet ist, insbesondere ein zur Paketdatenübertragung geeignetes mobiles Endgerät (MH). Der Netzwerkserver (LNS) im Sinne der Ansprüche kann derjenige Server sein, mit welchen ein Server seitens des Mobilfunknetzes (über welches das mobile Endgerät MH telefoniert) über eine Verbindung (hier: eine Tunnelverbindung, insbesondere L2TP-Verbindung) verbunden ist. Der Verbindungsserver (PEP, Performance Enhancing Proxy) hält erfindungsgemäß einen Verbindungsteil der Verbindung zwischen dem mobilen Endgerät und dem Netzwerkserver, wenn an irgendeiner Stelle die Verbindung abbricht, und zwar den Verbindungsteil zwischen ihm (dem Verbindungsserver) und dem Netzwerkserver.

Weitere Merkmale und Vorteile der Erfindung ergeben sich aus den Ansprüchen und der nachfolgenden Beschreibung eines Ausführungsbeispieles anhand der Zeichnung. Dabei zeigt:
- Fig.1: als Blockschaltbild ein virtuelles privates Netz mit einer Point-to-Point Verbindung unter Verwendung eines L2TP- Tunnelprotokolls,
- Fig.2: Header in einem durch einen L2TP-Tunnel über ein IP-Netz übertragenen Datenpaket,
- Fig.3: schematisch eine erfindungsgemäße Verbindung zwischen einem mobilen Endgerät und einem Netzwerkserver über ein Mobilfunknetz, einen Verbindungsserver und ein Internetprotokoll basiertes Netz.

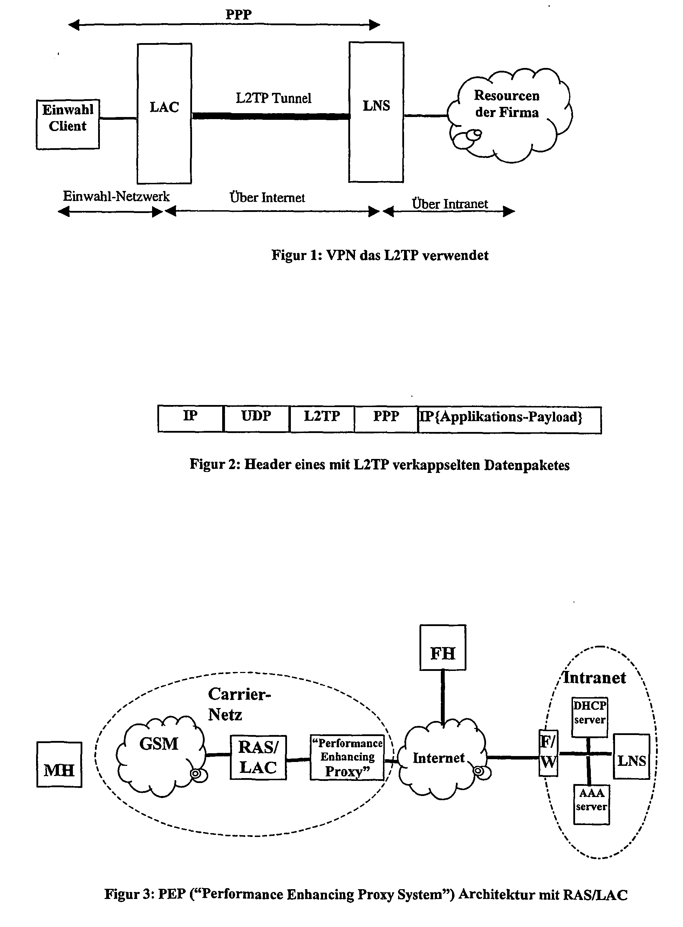

Fig.1 zeigt ein mobiles Endgerät (dial-in-client), welches über ein Einwählnetzwerk mit einem Ende (LAC, L2TP access concentrator) eines L2TP-Tunnels verbunden ist, an dessen anderem Ende sich ein Netzwerkserver (LNS = L2TP-Networkserver) befindet, an welchem ein privates Netz (beispielsweise Firmennetz "Companyresources"; Intranet) angeschlossen ist. Dabei besteht eine Punkt-zu-Punkt-Protokoll (PPP) -Verbindung zwischen dem mobilen Endgerät (Client) und dem Netzwerkserver (LNS) über ein Einwählnetzwerk (Dial-up Network- beispielsweise ein Mobilfunknetz) und (durch einen Tunnel L2TP zwischen LAC und LNS) ein Internetprotokoll- basiertes Netz (beispielsweise Internet).

Fig.2 zeigt für ein derartiges Tunnelprotokoll beispielhaft einen im L2TP-Tunnel möglichen Aufbau eines vom mobilen Endgerät (Client) zum Netzwerkserver (bzw. darüber angeschlossenen privaten Netz/Intranet) übertragenen Datenpaketes. Das Datenpaket enthält die zu übertragenen Daten (IP, Application Payload) und mehrere für die Weiterleitung des Datenpaketes verwendbare Header, nämlich einen für die Übertragung über ein Internetprotokoll basiertes Netz (Internet in Fig.3) verwendeten IP-Header, einen (in diesem Zusammenhang für das Verständnis nicht relevanten) Userdatagrammprotokollheader UDP, einen für die Übertragung im L2TP-Tunnel relevanten L2TP-Header und einen für die Point-to-Point Übertragung vom mobilen Endgerät (Client, MH) verwendbaren PPP-Header (Point-to-Point-Header).

Fig.3 veranschaulicht eine mögliche Architektur eines erfindungsgemäßen Übertragungsverfahrens bzw. Netzes. Von einem mobilen Endgerät (MH) werden über ein beliebiges Mobilfunknetz (GSM oder GPRS oder 3G oder beliebige andere Mobilfunknetze) Daten bis zu einem Netzwerkserver (LNS) seitens eines privaten Netzes oder Intranets übertragen. Vom mobilen Endgerät MH über ein Mobilfunknetz (GSM etc.) kommende Daten werden von einem Netzwerkserver LAC seitens des Radio-Access-Systems des mobilen Netzes (GSM) über ein Tunnelprotokoll (hier: L2TP) bis zu einem Netzwerkserver (LNS) eines privaten Netzes/Intranets übertragen. Dabei erfolgt die Übertragung teilweise über ein Internetprotokoll- basiertes Netz (hier: das Internet). Hierbei wäre problematisch, dass bei Abriss einer Verbindung zwischen dem mobilen Endgerät MH und dem Netzwerkserver LNS (beispielsweise aufgrund Störungen auf der Funkstrecke zwischen dem mobilen Endgerät und dem Radio-Access-System RAS bei einem Funkloch etc) die Verbindung zwischen dem mobilen Endgerät MH und dem LNS-Netzwerkserver komplett neu aufgebaut werden muss. Dies ist wegen der für den neuen verbindungsaufbau erforderlichen Zeit zeitaufwendig.

Überdies wurde bei bisherigen Lösungen dem mobilen Endgerät eine neue Internetprotokolladresse zugewiesen, was bei der Unterbrechung der Verbindung während der Übertragung einer großen Datenmenge (beim Herunterladen einer Datei vom Netzwerkserver zum mobilen Endgerät, beispielsweise E-Mail herunterladen, FTP- Datenübertragung etc.) eine erneute komplette Übertragung aller Daten (auch der bisher übertragenen Daten) erfordern würde.

Dies wird jedoch durch den erfindungsgemäßen Verbindungsserver PEP (Performance Enhancing Proxy) vermieden, welcher beim Abbruch der Verbindung zwischen dem mobilen Endgerät (beispielsweise auf der Mobilfunk-Funkstrecke GSM etc.) und dem erfindungsgemäßen Verbindungsserver PEP die Tunnelverbindung zwischen dem Verbindungsserver PEP und dem Netzwerkserver LNS über das Internet aufrechterhält, beim (beispielsweise vom mobilen Endgerät MH beantragten) Aufbau einer neuen Verbindung dem Endgerät für die neue Verbindung (zwischen dem Endgerät und dem Verbindungsserver) eine neue Internetadresse zuweist, darauf dem mobilen Endgerät die InternetprotokollAdresse (oder sonstige Adresse) zuweist, welche es in der abgebrochenen früheren Verbindung mit dem Netzwerkserver LNS verwendete und damit ermöglicht, dass das mobile Endgerät die alte Sitzung (der abgebrochenen alten Verbindung) mit dem Netzwerserver weiterführt. Da das mobile Endgerät hierbei die gleiche Internetprotokolladresse weiterverwenden kann, kann eine vor der Unterbrechung der Verbindung bereits teilweise übertragene Datei dadurch fertig übertragen werden, dass nur der Rest der Datei übertragen wird. Um eine Abbruch der Verbindung zwischen dem PEP-Verbindungsserver und dem LNS-Netzwerkserver zu verhindern, kann der PEP auch beim Abbruch der Verbindung zum mobilen Endgerät MH vom Mobilfunknetz oder LAC ausgesandte Nachrichten (beispielsweise Call- Disconnection-Notification = CDN) abfangen, um zu vermeiden, dass der Netzwerkserver LNS einen Verbindungsabbau veranlasst. Außerdem ist es vorstellbar, dass der Verbindungsserver PEP (Performance Enhancing Proxy) durch Senden von Nachrichten an den Netzwerkserver LNS diesem vortäuscht, dass das mobile Endgerät MH noch mit ihm verbunden sei.

## Patentansprüche

1. Verfahren zum Aufbau einer Verbindung (MH-LNS) eines mobilen Endgerätes (MH) mit einem Netzwerkserver (LNS) über ein Mobilfunknetz (GSM, RAS/LAC) und ein weiteres Netz (Internet),
wobei bei einer Verbindungsunterbrechung einer Verbindung vom mobilen Endgerät (MH) zum Netzwerkserver (LNS) ein Verbindungsteil (zwischen PEP und LNS) zwischen dem Verbindungsserver PEP und dem Netzwerkserver (LNS) aufrechterhalten wird, welcher Verbindungsteil (PEP/LNS) der Teil der Verbindung (MH-LNS) zwischen dem mobilen Endgerät (MH) und dem Netzwerkserver (LNS) ist,
wobei der Verbindungsserver (Performance Enhancing Proxy) beim Abbau einer Verbindung (MH-LNS) die Übertragung von den Abbau (in RAS) betreffenden Informationen (CDN), verhindert, um den Netzwerkserver (LNS) zur Beibehaltung des Verbindungsteils zwischen ihm (LNS) und dem Verbindungsserver (PEP = Performance Enhancing Proxy) zu veranlassen,
wobei bei einem späteren Aufbau einer neuen Verbindung zwischen dem mobilen Endgerät (MH) und dem Netzwerkserver (LNS) die aufrechterhaltene Teilverbindung (PEP-LNS) der unterbrochenen Verbindung Teil der neuen Verbindung wird.

2. Verfahren nach Anspruch 1, **dadurch gekennzeichnet, dass** die Verbindung (MR-LNS) zwischen dem mobilen Endgerät (MH) und dem Netzwerkserver (LNS) oder
die Verbindung (MH-LNS) zwischen dem Verbindungsserver (PEP = Performance Enhancing Proxy) und dem Netzwerkserver (LNS) eine Tunnelverbindung, insbesondere eine L2TP-Tunnelverbindung ist.

3. Verfahren nach Anspruch 1 oder 2, **dadurch gekennzeichnet, dass** die Verbindung (PEP-LNS) über das Internet läuft.

4. Verfahren nach einem der vorhergehenden Ansprüche,
**dadurch gekennzeichnet, dass** der Verbindungsserver (Performance Enhancing Proxy) beim Abbau einer Verbindung (MH-LNS) die Übertragung von den Abbau (in RAS) betreffenden "L2TP-Call-Disconnection-Notification", verhindert, um den Netzwerkserver (LNS) zur Beibehaltung des Verbindungsteils zwischen ihm (LNS) und dem Verbindungsserver (PEP = Performance Enhancing Proxy) zu veranlassen.

5. Verfahren nach einem der vorhergehenden Ansprüche, **dadurch gekennzeichnet, dass** bei einem durch eine Nachricht (Request for Connection) des mobilen Endgerätes (MH) veranlassten Aufbau einer neuen Verbindung das mobile Endgerät (MH) eine neue Adresse, insbesondere IP-Adresse, zugewiesen bekommt und veranlasst wird, die neue Verbindung mit seiner bisherigen IP-Adresse aus der ersten, unterbrochenen Verbindung fortzusetzen.

6. Verfahren nach einem der vorhergehenden Ansprüche, **dadurch gekennzeichnet, dass** für einen - vorzugsweise von dem mobilen Endgerät (MH) ausgelösten - vollständigen Verbindungsabbau der Verbindung zwischen der Mobilstation (MH) und dem Netzwerkserver (LNS) ein Timer gestartet wird und nach Ablauf des Timers eine Nachricht (CDN) an den Netzwerkserver (LNS) übermittelt wird.

7. Verfahren nach einem der vorhergehenden Ansprüche, **dadurch gekennzeichnet, dass** eine Authentisierung des mobilen Endgerätes (MH) und/oder einer endgerätseitigen Einrichtung (SIM), seitens (in AAA-Server) des Netzwerkservers bearbeitet wird.

8. Verfahren nach einem der vorhergehenen Ansprüche, **dadurch gekennzeichnet, dass** der Verbindungsserver für zwischen dem mobilen Endgerät (MH) und dem Netzwerkserver (LNS) zu übertragene Daten (Fig.2) nur hinsichtlich des ein IP-basiertes Netz (Fig.3, Internet) betreffenden Headers ("IP/UDP") als Namens-Adress-Zuordner oder NAT arbeitet, nicht jedoch hinsichtlich den Tunnel (Fig.1 L2TP) betreffender Header (Fig.2 "L2TP, PPP").

9. Verfahren nach einem der vorhergehenden Ansprüche, **dadurch gekennzeichnet, dass** das Verfahren für die Übertragung großer Datenmengen und/oder von Files verwendet wird.

10. Verfahren nach einem der vorhergehenden Ansprüche, **dadurch gekennzeichnet, dass** der Netzknoten (LNS) die Einwahl eines mobilen Endgerätes (MH) in ein privates Netz, insbesondere ein virtuelles privates Netz erlaubt, welches dem Endgerät (MH) vorzugsweise Dienste (Termine, E-Mails auslesen, Daten/Bilder herunterladen) zur Verfügung stellt.

11. Verfahren nach einem der vorhergehenden Ansprüche, **dadurch gekennzeichnet, dass** das an den Netzwerkserver (LNS) angeschlossene Netz ("Intranet") durch eine Abschirmverbindung (Firewall "F/W") gegenüber Zugriffen von Seiten des Internets abgeschirmt ist.

## Claims

1. Method for setting up a connection (MH-LNS) of a mobile terminal (MH) to a network server (LNS) via a mobile radio network (GSM, RAS/LAC) and a further network (Internet),
wherein, in the case of an interruption from the mobile terminal (MH) to the network server (LNS), a connection part (between PEP and LNS) between the connection server (PEP and a network server LNS) is maintained,
which connection part (PEP/LNS) is the part of the connection (MH-LNS) between the mobile terminal (MH) and a network server (LNS),
wherein the connection server (Performance Enhancing Proxy) on release of a connection (MH-LNS) prevents the transmission of information (CDN) relating to the release (in RAS) in order to pause the network server (LNS) to retain the connection part between itself (LNS) and the connection server (PEP = Performance Enhancing Proxy), wherein, during a later setting up of a new connection between the mobile terminal (MH) and the network server (LNS), the maintained part connection (PEP-LNS) of the interrupted connection becomes part of the new connection.

2. Method according to Claim 1, **characterized in that** the connection (MH-LNS) between the mobile terminal (MH) and the network server (LNS) or the connection (MH-LNS) between the connection server (PEP = Performance Enhancing Proxy) and the network server (LNS0 is a tunnel connection, particularly an L2TP tunnel connection.

3. Method according to Claim 1 or 2, **characterized in that** the connection (PEP-LNS) runs via the Internet.

4. Method according to one of the preceding claims, **characterized in that** the connection server (PEP = Performance Enhancing Proxy), during the release of a connection (MH-LNS), prevents the transmission of "L2TP Call Disconnection Notification" relating the release (in RAS) in order to cause the network server (LNS) to retain the connection part between itself (LNS) and the connection server (PEP = Performance Enhancing Proxy).

5. Method according to one of the preceding claims, **characterized in that** during a setting up of a new connection, initiated by a message (Request of Connection) of the mobile terminal (MH), the mobile terminal (MH) is assigned a new address, particularly IP address, and is cause to continue the new connection with its previous IP address from the first interrupted connection.

6. A method according to one of the previous claims, **characterized in that,** for a complete connection release - preferably triggered by the mobile terminal (MH) - of the connection between the mobile station (MH) and the network server (LNS), a timer is started and after the timer has elapsed, a message (CDN) is communicated to the network server (LNS).

7. Method according to one of the preceding claims, **characterized in that** an authentication of the mobile terminal (MH) and/or a device (SIM) at the terminal, is processed (in the AAA server) by the network server.

8. Method according to one of the preceding claims, **characterized in that** the connection server, for data to be transmitted between the mobile terminal (MH) and the network server (LNS) (Fig. 2), operates as name address allocator or NAT with regard to the header ("IP/UDP") relating to an IP-based network (Fig. 3, Internet), but not with regard to header (Fig. 2 "LTTP, PPP") relating to the tunnel. (Fig. 1 L2TP).

9. Method according to one of the preceding claims, **characterized in that** the method is used for transmitting large volumes of data and/or files.

10. Method according to one of the preceding claims, **characterized in that** the network node (LNS) allows a mobile terminal (MH) to dial into a private network, particularly a virtual private network which preferably provides the terminal (MH) with services (date, reading out of E-mails, downloading of data/images.

11. Method according to one of the preceding claims, **characterized in that** the network ("Intranet") connected to the network server (LNS) is shielded from accesses from the Internet by a shielding connection (Firewall "F/W").

## Revendications

1. Procédé pour l'établissement d'une communication (MH-LNS) d'un terminal mobile (MH) avec un serveur de réseau (LNS) par l'intermédiaire d'un réseau de téléphonie mobile (GSM, RAS/LAC) et d'un autre réseau (Internet), une partie de communication (entre PEP et LNS) entre le serveur de communication PEP et le serveur de réseau (LNS) étant maintenue lors d'une interruption d'une communication du terminal mobile (MH) au serveur du réseau (LNS), laquelle partie de communication (PEP/LNS) est une partie de la communication (MH, LNS) entre le terminal mobile (MH) et le serveur de réseau (LNS),
le serveur de communication (Performance Enhancing Proxy) empêchant lors de l'interruption d'une communication (MH-LNS) la transmission d'informations (CDN) concernant l'interruption (en RAS), afin de demander au serveur de réseau (LNS) de conserver la partie de communication entre lui (LNS) et le serveur de communication (PEP = Performance Enhancing Proxy),
la communication partielle (PEP-LNS) conservée de la communication interrompue faisant partie de la nouvelle communication dans le cas d'un établissement ultérieur d'une nouvelle communication entre le terminal mobile (MH) et le réseau de serveur (LNS).

2. Procédé selon la revendication 1, **caractérisé en ce que** la communication (MH-LNS) entre le terminal mobile (MH) et le serveur de réseau (LNS) ou la communication (MH-LNS) entre le serveur de communication (PEP = Performance Enhancing Proxy) et le serveur de réseau (LNS) étant une communication de tunnel, en particulier une communication de tunnel L2TP.

3. Procédé selon la revendication 1 ou 2, **caractérisé en ce que** la communication (PEP-LNS) s'effectue par Internet.

4. Procédé selon l'une quelconque des revendications précédentes, **caractérisé en ce que** le serveur de communication (Performance Enhancing Proxy) empêche en cas d'interruption d'une communication (MH-LNS) la transmission de " L2TP-Call-Disconnection-Notification " concernant l'interruption (en RAS), afin de demander au serveur de réseau (LNS) de conserver la partie de communication entre lui (LNS) et le serveur de communication (PEP = Performance Enhancing Proxy).

5. Procédé selon l'une quelconque des revendications précédentes, **caractérisé en ce que,** lors de l'établissement, demandé par un message par réseau (Request for Connection) du terminal mobile (MH), d'une nouvelle communication, le terminal mobile (MH) reçoit une nouvelle adresse, en particulier une adresse IP, et est invité à poursuivre la nouvelle communication avec son ancienne adresse IP à partir de la première communication interrompue.

6. Procédé selon l'une quelconque des revendications précédentes, **caractérisé en ce qu'**une minuterie est démarrée pour une interruption de communication complète - déclenchée de préférence par le terminal mobile (MH) - de la communication entre la station mobile (MH) et le serveur de réseau (LNS) et un message (CDN) est transmis au serveur de réseau (LNS) après l'écoulement de la minuterie.

7. Procédé selon l'une quelconque des revendications précédentes, **caractérisé en ce que** une authentification du terminal mobile (MH) et/ou d'un dispositif côté terminal (SIM) est traité par le serveur de réseau dans le serveur (AAA).

8. Procédé selon l'une quelconque des revendications précédentes, **caractérisé en ce que** le serveur de communication travaille pour des données (figure 2) à transmettre entre le terminal mobile (MH) et le serveur de liaison (LNS) uniquement en ce qui concerne l'en-tête (" IP/UDP ") concernant un réseau basé sur IP (figure 3, Internet) en tant que dispositif d'attribution de nom et adresse ou NAT, mais pas en ce qui concerne le tunnel (figure 1, L2TP) d'en-têtes concernés (figure 2, " L2TP, PPP".

9. Procédé selon l'une quelconque des revendications précédentes, **caractérisé en ce que** le procédé est utilisé pour la transmission de grandes quantités de données et/ou de fichiers.

10. Procédé selon l'une quelconque des revendications précédentes, **caractérisé en ce que** le noeud de réseau (LNS) permet la sélection à l'entrée d'un terminal mobile (MH) dans un réseau privé, en particulier un réseau privé virtuel, qui met de préférence des services (lecture d'échéances, d'e-mails, téléchargement de données, d'images) à la disposition du terminal (MH).

11. Procédé selon l'une quelconque des revendications précédentes, **caractérisé en ce que** le réseau (" Intranet ") raccordé au serveur de réseau (LNS) est protégé par une communication de protection (Firewall "F/W") par rapport à des accès par Internet.
